(19) Europäisches Patentamt

European Patent Office

Office européen des brevets

(11) **EP 3 882 026 A1**

(12) **EUROPEAN PATENT APPLICATION**
published in accordance with Art. 153(4) EPC

(43) Date of publication:
**22.09.2021 Bulletin 2021/38**

(21) Application number: **19884776.6**

(22) Date of filing: **08.11.2019**

(51) Int Cl.:
*B32B 27/36* (2006.01)   *C09D 5/02* (2006.01)
*C09D 167/00* (2006.01)   *B32B 15/09* (2006.01)
*B32B 1/02* (2006.01)

(86) International application number:
**PCT/JP2019/044008**

(87) International publication number:
**WO 2020/100776 (22.05.2020 Gazette 2020/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2018   JP 2018213329**

(71) Applicant: **Toyo Seikan Group Holdings, Ltd.
Shinagawa-ku
Tokyo 141-8627 (JP)**

(72) Inventors:
• **KASHIWAKURA, Takuya**
**Yokohama-shi, Kanagawa 240-0062 (JP)**
• **YAMAMOTO, Hiromi**
**Yokohama-shi, Kanagawa 240-0062 (JP)**
• **SAKURAGI, Arata**
**Yokohama-shi, Kanagawa 240-0062 (JP)**
• **ZHANG, Nan**
**Yokohama-shi, Kanagawa 240-0062 (JP)**

(74) Representative: **J A Kemp LLP
14 South Square
Gray's Inn
London WC1R 5JJ (GB)**

(54) **COATING COMPOSITION AND COATED METAL SUBSTRATE HAVING COATING FILM COMPRISING SAID COATING COMPOSITION**

(57)   A coating composition of the present invention contains a polyester resin (A) having an acid value of not lower than 5 mgKOH/g, a polyester resin (B) having an acid value of lower than 5 mgKOH/g, and a curing agent having a functional group capable of crosslinking reaction with a carboxyl group. Assuming that the total solid content mass of the polyester resin (A) and the polyester resin (B) is 100 parts by mass, the content of the polyester resin (A) is in a range of more than 50 parts by mass to not more than 97 parts by mass, and the content of the polyester resin (B) is in a range of not less than 3 parts by mass to less than 50 parts by mass. It is possible to form a coating that has excellent can-making workability to effectively prevent metal exposure even when subjected to severe working such as drawing and ironing, and also has excellent resistance against coating delamination so that it can be prevented from delamination even during a heat treatment conducted after formation.

EP 3 882 026 A1

## Description

Technical Field:

The present invention relates to a coating composition and a coated metal substrate having a coating formed of the coating composition. More specifically, the present invention relates to a coating composition capable of forming a coating that has excellent can-making workability to be subjected to severe working such as drawing and ironing under dry conditions, and also has excellent resistance against coating delamination so that it can be prevented from delamination or peeling even during a heat treatment conducted after can formation. The present invention further relates to a coated metal substrate having a coating formed of the coating composition.

Background Art:

An organic resin-coated metal sheet, which is prepared by coating a metal sheet like an aluminum sheet with an organic resin film, has been known as a can material. It has been also known that this organic resin-coated metal sheet is drawn or drawn-ironed to make a seamless can to be filled with beverage or the like. Alternatively for instance, the sheet is pressed to make an easy-open-end type can lid. For instance, an organic resin-coated metal sheet has an organic resin coating layer of a thermoplastic resin film formed of a polyester resin based on an ethylene terephthalate unit. This sheet is used as a material for seamless cans (drawn-ironed cans) to be formed by drawing and ironing (e.g., Patent Document 1). The organic resin-coated metal sheet can be drawn and ironed under dry conditions without using a liquid coolant. Thus, it has an advantage of remarkably reducing load on atmosphere in comparison with a case where a metal sheet without an organic resin coating is drawn and ironed by use of a massive amount of liquid coolant.

The organic resin-coated metal sheet can be produced by a film lamination method such as thermally bonding a pre-formed film of a thermoplastic polyester resin or the like to a metal sheet, or bonding a molten thin film of an extruded thermoplastic polyester resin or the like to a metal sheet, i.e., extrusion lamination. However, since the film lamination method cannot be suitably applied to the formation of a thin film, the film produced by this method tends to be thick, which may cause disadvantages from an economic viewpoint.

There has been a proposal of replacing the organic resin-coated metal sheet produced by the film lamination method with a coated metal sheet prepared by forming a coating on a metal sheet by a method that allows the formation of a thin film. According to the proposal, a drawn-ironed can is produced from the coated metal sheet under dry conditions.

For instance, Patent Document 2 proposes a coated metal plate for a drawn-ironed can. The plate is a double coated metal plate that includes: a film serving as the inner side of the can after working which has a dry coating amount in a range of 90 to 400 mg/100 cm$^2$, a glass transition temperature in a range of 50°C to 120°C, and also a pencil hardness of $\geq$H, an elongation percentage in a range of 200% to 600%, and a coefficient of kinetic friction in a range of 0.03 to 0.25 under test conditions at 60°C; and a film serving as the outer side of the can after working which has a dry coating amount in a range of 15 to 150 mg/100 cm$^2$, a glass transition temperature in a range of 50°C to 120°C, and also a pencil hardness of $\geq$H under the test conditions at 60°C.

Prior Art Documents:

Patent Documents:

Patent Document 1: JP-A-2001-246695
Patent Document 2: JP 3872998 B

Summary of the Invention:

Problems to be solved by the invention:

Patent Document 2 employs a coating composition that contains a polyester resin and a resol-type phenol resin as coating materials for the inner surface of the can, and a polyester resin and an amino resin and/or a resol-type phenol resin as coating materials for the outer surface of the can. In coatings formed of the coating composition, hard and brittle domains derived from a self-condensate of the phenol resin or the amino resin are formed, which may cause a decrease in workability of the coating, resulting in problems in terms of can-making workability. In a case of using the resol-type phenol resin, a coating to be formed may have a yellowish color peculiar to the phenol resin, which may become problems in the color tone depending on the intended use such as application to the outer surface.

A drawn-ironed can formed of a coated metal sheet may be heat treated after formation in order to remove the residual strain of the coating caused by the working or to dry and cure a printing ink or varnish printed on the surface. In such a case, the internal stress (residual stress) on the coating, which has been generated by the severe working, is relieved. As a result, delamination of the coating from the metal substrate may occur particularly at a site of the can body side wall that has been worked severely to have a decreased thickness.

Accordingly, an object of the present invention is to provide a coating composition capable of forming a coating that has excellent can-making workability to be subjected to severe working such as drawing and ironing under dry conditions without causing the aforementioned problems, and also has excellent resistance against coating delamination so that it can be prevented from delamination even during a heat treatment conducted after can body formation. A further object of the present invention is to provide a coated metal substrate having a coating formed of the coating composition.

Means for solving the problems:

The present invention provides a coating composition containing a polyester resin (A) having an acid value of not lower than 5 mgKOH/g, a polyester resin (B) having an acid value of lower than 5 mgKOH/g, and a curing agent (crosslinking agent) having a functional group capable of crosslinking reaction with a carboxyl group. Assuming that the total solid content mass of the polyester resin (A) and the polyester resin (B) is 100 parts by mass, the content of the polyester resin (A) is in a range of more than 50 parts by mass to not more than 97 parts by mass, and the content of the polyester resin (B) is in a range of not less than 3 parts by mass to less than 50 parts by mass.

It is suitable in the coating composition of the present invention that:

1. the curing agent is at least one selected from the group of a β-hydroxyalkylamide compound, an oxazoline group-containing compound, and a carbodiimide group-containing compound;
2. the curing agent is a β-hydroxyalkylamide compound;
3. the acid value of the polyester resin (A) is 10 to 70 mgKOH/g;
4. the acid value of the polyester resin (B) is lower than 3 mgKOH/g;
5. the polyester resin (B) is a sulfonic acid group-containing polyester resin; and
6. the coating composition is an aqueous coating composition.

The present invention also provides a coated metal substrate provided with a coating formed of the above-described coating composition

The present invention further provides a coated metal substrate having a coating on at least one surface of the metal substrate. The coating contains a polyester resin as a base resin and a β-hydroxyalkylamide compound as a curing agent, and the coating has two or more glass transition temperatures.

It is suitable in the coated metal substrate of the present invention that:

1. the two or more glass transition temperatures of the coating fall between -70°C and 120°C, among which the lowest glass transition temperature falls within a range of -70°C to 80°C; and
2. the coating has a thickness of less than 30 μm.

The present invention further provides a drawn-ironed can formed of the above-described coated metal substrate.

Effects of the invention:

In light of the aforementioned circumstances, the present inventors diligently studied suitable coating compositions and found a solution to the problems. That is, it is possible to solve the problems by using a mixture of polyester resins having different acid values and a specific curing agent (crosslinking agent). The coated metal substrate having a coating formed of the coating composition of the present invention has excellent coating workability and elongability. Therefore, even when the coated metal substrate is subjected to severe working such as drawing and ironing, not only ruptures on the can body side wall (this rupture may be called "body rupture" in the present invention) but also metal exposure can be prevented effectively. Thus, the substrate has excellent can-making workability. In addition to that, the coating to be formed is colorless and transparent, and thus, no problem may arise in the color tone. Further, the internal stress generated by the severe can-making working can be relieved by flexible components present in the coating. As a result, delamination of the coating can be prevented even in a case of applying heat after can body formation. Therefore, the coated metal substrate with excellent resistance against coating delamination can be suitably used for making a drawn-ironed can and the like.

Mode for Carrying Out the Invention:

Hereinafter, the coating composition of the present invention will be described in more detail.

(Polyester resin)

The coating composition of the present invention is characterized as follows. A polyester resin to be used as a base resin is a mixed polyester resin of a polyester resin (A) having an acid value of not lower than 5 mgKOH/g and a polyester resin (B) having an acid value of lower than 5 mgKOH/g. Assuming that the total solid content mass of the polyester resin (A) and the polyester resin (B) is 100 parts by mass, the content of the polyester resin (A) is in a range of more than 50 parts by mass to not more than 97 parts by mass, and the content of the polyester resin (B) is in a range of not less than 3 parts by mass to less than 50 parts by mass. This is an important characteristic to achieve excellent can-making workability as well as excellent resistance against coating delamination that prevents delamination of the coating even during a heat treatment as described above. The reason may be presumed as follows.

In a baking step performed after the coating composition of the present invention is coated on a metal substrate, a crosslinking reaction is caused between a curing agent (crosslinking agent) such as a β-hydroxyalkylamide compound and a carboxyl group of the polyester resin to produce a three-dimensional network crosslinked structure, thereby forming a cured coating. In the baking step, crosslinkability (curability) and workability of the coating are greatly affected by the acid value of the polyester resin as a main component. When the polyester resin (A) which has a relatively high acid value, that is, contains a relatively large amount of carboxyl groups that serve as reaction points with the curing agent is used alone as a base resin, the polyester resin reacts efficiently with the crosslinking agent to form a crosslink easily, thereby achieving excellent curability. However, the highly crosslinked polyester resin causes the coating to be less likely to be elongated as compared with an uncrosslinked polyester resin. Accordingly, when the coated metal sheet is subjected to severe working such as ironing, it becomes difficult for the coating to coat the metal substrate as the working proceeds, so that metal exposure may occur. In addition, since the crosslinked coating is subjected to large deformation by the can-making working, a large internal stress remains on the coating after the working. When the coating in this state is subjected to a heat treatment to a temperature higher than the glass transition temperature of the polyester resin (approximately 200°C) during a step of drying the outer surface print, shrinkage stress may be applied to the interface between the coating and the substrate as the internal stress is relieved, thereby causing delamination of the coating.

On the other hand, when a coating material that contains a blend of the polyester resin (A) and the polyester resin (B) having an acid value of lower than 5 mgKOH/g is coated and baked in a like manner, the polyester resin (A) reacts with the curing agent to form a crosslinked structure, while the polyester resin (B) which contains a small amount of carboxyl groups that serve as reaction points with the curing agent hardly or never reacts with the curing agent. Accordingly, the polyester resin (B) is less likely to be incorporated into the crosslinked structure and mostly remains uncrosslinked. As a result, phase separation occurs between the crosslinked structure and the components that have not been incorporated into the crosslinked structure, which presumably results in the formation of a sea-island structure comprising a matrix (continuous layer) with the crosslinked structure formed mainly of the polyester resin (A) and a domain (dispersion layer) formed mainly of the polyester resin (B). When the coating has the sea-island structure, i.e., the structure in which the uncrosslinked domain superior in elongability and flexibility is finely dispersed, the coating as a whole has markedly increased workability, and becomes capable of effectively suppressing the occurrence of metal exposure even when subjected to severe working such as ironing. Further, the domain formed mainly of the polyester resin (B) is flexible enough to immediately relieve the internal stress generated during the can-making working. Therefore, shrinkage stress to be generated during a heat treatment can be reduced significantly, thereby preventing delamination of the coating.

The solid content blend ratio of the polyester resin (A) and the polyester resin (B) is as described above. It is important that, assuming that the total solid content mass of the polyester resin (A) and the polyester resin (B) is 100 parts by mass, the content of the polyester resin (A) is in a range of more than 50 parts by mass to not more than 97 parts by mass, preferably 60 to 95 parts by mass, and more preferably 70 to 90 parts by mass, and the content of the polyester resin (B) is in a range of not less than 3 parts by mass to less than 50 parts by mass, preferably 5 to 40 parts by mass, and more preferably 10 to 30 parts by mass. When the content of the polyester resin (A) is more than this range and the content of the polyester resin (B) is less than this range, it becomes difficult to obtain the aforementioned effect to be achieved by blending the polyester resin (B). In contrast, when the content of the polyester resin (A) is less than the range and the content of the polyester resin (B) is more than the range, a large amount of uncrosslinked polyester resin may be present in the coating, so that the coating as a whole lacks curability and suffers a decline in heat resistance. As a result, in a case where the coated metal substrate is consecutively subjected to drawing and ironing at a high speed to form a can body, which is accompanied by a temperature rise due to heat generated during the formation, the coating may easily stick to a mold. Particularly on the inner surface of the can, the can body may stick to a shaping punch at the time of pulling the can body out from the shaping punch after the formation by drawing-ironing, thereby hindering separation between the shaping punch and the can body. This phenomenon is called stripping failure, and it may cause buckling or body rupture of the can body, resulting in degraded productivity. On the outer surface of the can, appearance defects such as coating scraping may be caused. Further, due to a large amount of uncrosslinked components, the coating suffers a degradation in waterpoofness and resistance against retort whitening.

In order to achieve the above-described effect efficiently, it is favorable that the polyester resin (A) has an acid value of not lower than 5 mgKOH/g, preferably in a range of 10 to 70 mgKOH/g, more preferably 15 to 70 mgKOH/g, further preferably 15 to 50 mgKOH/g, and particularly preferably not lower than 17 mgKOH/g to lower than 30 mgKOH/g. When the acid value is lower than this range, the number of carboxyl groups serving as points for crosslinking with the curing agent is so small that sufficient curability is unlikely to be achieved. This may degrade heat resistance of the coating. As a result, in a case where the coated metal substrate is consecutively subjected to drawing and ironing at a high speed to form a can body, the coating may easily stick to a mold. Further, since a large amount of uncrosslinked components may be present, the coating suffers a degradation in waterproofness and resistance against retort whitening. Furthermore, the coating may have inferior adhesiveness due to a small amount of carboxyl groups that contribute to adhesiveness between the coating and the metal substrate. On the other hand, when the acid value is higher than the range, the number of points for crosslinking with the curing agent is so large that excellent curability can be obtained. However, the crosslinking density tends to be excessively high, which degrades coating elongability and workability, resulting in inferior can-making workability. Further, since a large internal stress is generated at the time of working, delamination of the coating may easily occur during a heat treatment after can body formation. Even when the acid value is higher than the range, the crosslinking density can be controlled or decreased by any adjustment such as reducing the blend amount of the curing agent. In such a case, however, free carboxyl groups that are not used for crosslinking may remain in the coating. Accordingly, the coating will be inferior in waterproofness, and as a result, sufficient corrosion resistance cannot be achieved.

On the other hand, it is preferable that the polyester resin (B) has an acid value of lower than 5 mgKOH/g, particularly lower than 3 mgKOH/g. When the acid value is higher than this range, the polyester resin (B) is likely to cause a crosslinking reaction with the curing agent, which makes it difficult to achieve the above-described effect.

In the present invention, each of the polyester resin (A) and the polyester resin (B) may be a blend of a plurality of polyester resins. For example, the polyester resin (A) may be a mixed polyester resin (A') formed of a plurality of kinds of polyester resins, and the polyester resin (B) may be a mixed polyester resin (B') formed in a like manner. In such a case, the sum of the values each of which is obtained by multiplying the acid value of each polyester resin by the mass fraction is defined as the average acid value ($Av_{mix}$) of the mixed polyester resin (A') or the mixed polyester resin (B'). The thus-obtained acid value may be within the aforementioned range. Further, polyester resins constituting the mixed polyester resin (A') may be selected from the polyester resin (A) having an acid value in the aforementioned range of not lower than 5 mgKOH/g, and polyester resins constituting the mixed polyester resin (B') may be selected from the polyester resin (B) having an acid value in the aforementioned range of lower than 5 mgKOH/g.

Each of the polyester resins (A) and (B) to be used in the present invention may be any conventionally known polyester resin used for a coating composition as long as it has the aforementioned acid value. In a case where the coating composition is an aqueous coating composition, a water-dispersible and/or water-soluble polyester resin is used.

A water-dispersible polyester resin and a water-soluble polyester resin are polyester resins containing hydrophilic groups as their components. These components may be physically adsorbed on the surface of the polyester dispersed elements, but particularly preferably, they are copolymerized in the polyester resin skeleton.

Examples of the hydrophilic group include a hydroxyl group, an amino group, a carboxyl group, a sulfonic acid group, or a derivative or metal salt thereof, and ether. A polyester resin containing these groups in its molecules can be present in a state dispersible in water.

Specific examples of the component containing the hydrophilic group include: carboxylic anhydrides such as phthalic anhydride, succinic anhydride, maleic anhydride, trimeric anhydride, itaconic anhydride, and citraconic anhydride; hydroxyl group-containing polyether monomers such as polyethylene glycol, polypropylene glycol, glycerin, and polyglycerin; and metal salts or ammonium salts of sulfonic acid-containing aromatic monomers such as 5-sulfoisophthalic acid, sulfoterephthalic acid, 4-sulfophthalic acid, 4-sulfonaphthalene-2,7-dicarboxylic acid, and 4-sulfo-1,8-naphthalenedicarboxylic anhydride.

In the present invention, an example of the polyester resin (A) used suitably is a carboxyl group-containing polyester resin having a carboxyl group as a hydrophilic group, and an example of the polyester resin (B) used suitably is a sulfonic acid group-containing polyester resin having a sulfonic acid group.

There is no particular limitation for the monomer component to form the polyester resin in combination with the monomer containing the hydrophilic group, as long as the monomer is the one usually used for polymerization of a polyester resin. Examples of a polyvalent carboxylic acid component to constitute the polyester resin include: aromatic dicarboxylic acids such as terephthalic acid, isophthalic acid, orthophthalic acid and naphthalenedicarboxylic acid; aliphatic dicarboxylic acids such as succinic acid, glutaric acid, adipic acid, azelaic acid, sebacic acid, dodecanedionic acid, and dimer acid; unsaturated dicarboxylic acids such as (anhydrous) maleic acid, fumaric acid, and terpene-maleic acid adducts; alicyclic dicarboxylic acids such as 1,4-cyclohexanedicarboxylic acid, tetrahydrophthalic acid, hexahydroisophthalic acid, and 1,2-cyclohexenedicarboxylic acid; and trivalent or higher valent carboxylic acids such as (anhydrous) trimellitic acid, (anhydrous) pyromellitic acid, and methylcyclohexenetricarboxylic acid. Among them, one or plural kinds of monomers can be selected to be used. In the present invention, the percentage of the aromatic dicarboxylic acid such as terephthalic acid, isophthalic acid and naphthalenedicarboxylic acid in the polyvalent carboxylic acid component to constitute the polyester resin is preferably not less than 60 mol% and particularly preferably not less than 80%, from the viewpoint of corrosion resistance, retort resistance, flavor retention and the like.

A polyvalent alcohol component to constitute the polyester resin is not limited particularly, and examples thereof include: aliphatic glycols such as ethylene glycol, propylene glycol(1,2-propanediol), 1,3-proanediol, 1,4-butanediol, 1,2-butanediol, 1,3-butanediol, 2-methyl-1,3-propanediol, neopentylglycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol; ether glycols such as diethylene glycol, triethylene glycol, polyethylene glycol, polypropylene glycol and polytetramethylene glycol; alicyclic polyalcohols such as 1,4-cyclohexanedimethanol, 1,3-cyclohexanedimethanol, 1,2-cyclohexanedimethanol, tricyclodecaneglycols, and water-added bisphenols; and trivalent or higher polyalcohols such as trimethylolpropane, trimethylolethane, and pentaerythritol. Each of the components can be used singly or in combination with at least one of the other components. Among these polyhydric alcohol components, ethylene glycol, propylene glycol, 1,4-butanediol, 1,4-cyclohexanedimethanol, or 2-methyl-1,3-propanediol can be suitably used as a component to constitute the polyester resin in the present invention.

The carboxyl group-containing polyester resin can be produced by any known method such as polycondensation of at least one of the aforementioned polyvalent carboxylic acid components and at least one of the polyhydric alcohol components. Another method is depolymerization with a polyvalent carboxylic acid component such as terephthalic acid, isophthalic acid, trimellitic anhydride, trimellitic acid or pyromellitic acid after polycondensation, or ringopening addition of an acid anhydride such as phthalic anhydride, maleic anhydride, trimellitic anhydride or ethylene glycol bistrimellitate dianhydride after polycondensation. The sulfonic acid group-containing polyester resin can be produced by any known method such as copolymerization of, for example, metal salts or ammonium salts of a sulfonic acid-containing aromatic monomer such as 5-sulfoisophthalic acid, sulfoterephthalic acid, 4-sulfophthalic acid, 4-sulfonaphthalene-2,7-dicarboxylic acid, or 4-sulfo-1,8-naphthalenedicarboxylic anhydride, together with the aforementioned polyvalent carboxylic acid component and polyhydric alcohol component.

It is desirable that the polyester resin to be used in the present invention is an acrylic unmodified polyester resin that is not modified with an acrylic resin.

As for a polyester-based aqueous coating composition, it has been widely proposed to use an acrylic modified polyester resin. This resin is prepared by modifying a polyester resin with an acrylic resin by a method such as graft polymerization of a polymerizable unsaturated monomer on the polyester resin. However, the polyester resin modified with an acrylic resin tends to be inferior in workability of a coating to be formed. Further, the modification may increase the number of production steps and also the production cost. In light of this, the polyester resin to be used in the present invention is preferably a polyester resin that is not modified with an acrylic resin (acrylic unmodified polyester resin). In a case of using an acrylic modified polyester resin, the content (mass ratio) of the acrylic resin component (polymer component of the polymerizable unsaturated monomer) in the entire acrylic modified polyester resin is preferably less than 10% by mass.

It is desirable that the polyester resin (A) used in the present invention has a glass transition temperature (Tg) in a range of 20°C to 120°C, preferably 30°C to 100°C, and further preferably 40°C to 90°C. Also, it is desirable that the polyester resin (B) to be used in the present invention has a glass transition temperature (Tg) in a range of -70°C to 80°C, preferably -50°C to 70°C, more preferably -40°C to 60°C, and still more preferably -30°C to 50°C. When each Tg is higher than this range, the coating to be formed may be hard, resulting in inferior elongability and workability. Further, as for the polyester resin (B), it may be difficult to obtain the above-described effect such as relieving the internal stress generated during the can-making working. On the other hand, when each Tg is lower than the range, barrier properties of the coating may decrease, resulting in inferior corrosion resistance and retort resistance.

As described above, each of the polyester resin (A) and the polyester resin (B) of the present invention may be a blend of a plurality of polyester resins. For example, in a case where the polyester resin (A) is the mixed polyester resin (A') formed of a plurality of kinds of polyester resins, and the polyester resin (B) is the mixed polyester resin (B') formed in a like manner, the glass transition temperature ($Tg_{mix}$) of each of the mixed polyester resins is calculated by the following Equation (1). The glass transition temperature of each of the mixed polyester resin (A') and the mixed polyester resin (B') may be within the aforementioned range.

$$1/Tg_{mix} = (W_1/Tg_1) + (W_2/Tg_2) + \ldots + (W_m/Tg_m) \ldots (1)$$

$$W_1 + W_2 + ... + W_m = 1$$

In the Equation, $Tg_{mix}$ represents the glass transition temperature (K) of the mixed polyester resin, and $Tg_1$, $Tg_2$, ..., $Tg_m$ represent the glass transition temperatures (K) of respective polyester resins used (polyester resin 1, polyester resin 2, ..., polyester resin m). Further, $W_1$, $W_2$, ..., $W_m$ represent the mass fractions of the respective polyester resins (polyester resin 1, polyester resin 2, ..., polyester resin m).

The number average molecular weight (Mn) of each of the polyester resins (A) and (B) is preferably in a range of 1,000 to 100,000, particularly 1,000 to 50,000, though the present invention is not limited to this range. When the number average molecular weight is smaller than this range, the coating may become brittle and inferior in workability; when it is larger than the range, stability of the coating material may deteriorate.

The hydroxyl value of each of the polyester resins (A) and (B) is preferably not higher than 20 mgKOH/g, more preferably not higher than 15 mgKOH/g, though the present invention is not limited thereto. When a β-hydroxyalkylamide compound is used as the curing agent, most of the hydroxyl groups of the polyester resin remain unreacted in the coating, because the β-hydroxyalkylamide compound is considered to react with the carboxyl groups of the polyester resin to form a crosslink but hardly or never react with the hydroxyl groups. Thus, when the hydroxyl value is higher than this range, more hydroxyl groups may remain, resulting in degraded corrosion resistance and resistance against retort whitening.

Suitable examples of the polyester resin (B) include the following commercial products: "Bironal MD-1100" (number average molecular weight: 20,000, Tg: 40°C, acid value: lower than 3 mgKOH/g, hydroxyl value: 5 mgKOH/g), "Bironal MD-1200" (number average molecular weight: 15,000, Tg: 67°C, acid value: lower than 3 mgKOH/g, hydroxyl value: 6 mgKOH/g), "Bironal MD-1500" (number average molecular weight: 8,000, Tg: 77°C, acid value: lower than 3 mgKOH/g, hydroxyl value: 14 mgKOH/g), "Bironal MD-1985" (number average molecular weight: 25,000, Tg: -20°C, acid value: lower than 3 mgKOH/g, hydroxyl value: 4 mgKOH/g), each of which is manufactured by TOYOBO CO., LTD.; "PLAS COAT Z-221" (sulfonic acid group-containing type, molecular weight: about 14,000, Tg: 47°C, acid value: lower than 5 mgKOH/g), "PLAS COAT Z-880" (sulfonic acid group-containing type, molecular weight: about 15,000, Tg: 20°C, acid value: lower than 5 mgKOH/g), each of which is manufactured by GOO CHEMICAL CO., LTD.; and "Polyester WR-901" (sulfonic acid group-containing type, Tg: 51°C, acid value: lower than 4 mgKOH/g, hydroxyl value: 4-8 mgKOH/g) manufactured by The Nippon Synthetic Chemical Industry Co., Ltd.

(Curing agent)

The present invention is characterized by the use of a specific curing agent that has a functional group capable of crosslinking reaction with the carboxyl group of the polyester resin as a base resin.

The functional group equivalent of the functional group of the curing agent used in the present invention is preferably in a range of 30 to 600 g/eq, particularly preferably 40 to 200 g/eq. In the present invention, the functional group equivalent denotes the value obtained by dividing the molecular weight by the number of functional groups per molecule of the curing agent (here, the functional group refers to a functional group capable of crosslinking reaction with the carboxyl group of the polyester resin as a base resin). Namely, it means the molecular weight per functional group of the curing agent and may be expressed as an epoxy equivalent, for example. When the functional group equivalent is smaller than this range, the distance between the crosslinking points cannot be set long, so that flexibility of the coating may be lowered and workability may be degraded. On the other hand, when the same equivalent exceeds the range, curability may be inferior.

Further, it is preferable that the curing agent hardly or never undergoes a self-condensation reaction between curing agents. Amino resins such as a resol-type phenol resin and a melamine resin are usually used as a curing agent for a polyester-based coating composition. These resins are likely to undergo a self-condensation reaction between curing agents, so that a self-condensate as a hard and brittle domain is formed during the formation of the coating. As a result, the coating may become hard to suffer a workability degradation. Further, since the reaction points (functional group) of the curing agent are consumed by the self-condensation reaction, a larger amount of curing agent may be inefficiently required to impart sufficient curability. Besides, the curing agent contained in the coating in a larger amount may have an adverse effect on coating properties such as workability and impact resistance. On the other hand, in a case of using a curing agent that hardly or never undergoes a self-condensation reaction, it is possible to suppress the formation of a hard and brittle self-condensate, to efficiently blend a minimum amount of curing agent corresponding to the amount of carboxyl groups of the polyester resin, and to reduce the amount of curing agent in the coating. As a result, a coating excellent in workability and impact resistance can be obtained.

For these reasons, the curing agent preferably has, as a functional group having reactivity with the carboxyl group of the polyester resin, a functional group that is less likely to cause a self-condensation reaction between curing agents. Examples of such a curing agent include a β-hydroxyalkylamide compound, a carbodiimide group-containing compound (polymer), and an oxazoline group-containing compound (polymer). Among them, the β-hydroxyalkylamide compound can be used particularly preferably.

[β-hydroxyalkylamide compound]

In the coating composition of the present invention, the curing agent is preferably formed of a β-hydroxyalkylamide compound having a β-hydroxyalkylamide group as a functional group capable of crosslinking reaction with the carboxyl group of the polyester resin as a base resin.

As described above, the curing agent formed of the β-hydroxyalkylamide compound has no risk of causing workability degradation due to a self-condensation reaction between curing agents. Further, sufficient curability can be achieved efficiently by a minimum amount of curing agent, and the amount of the curing agent in the coating can be reduced. As a result, a coating excellent in workability can be obtained. Furthermore, a colorless and transparent coating can be formed advantageously without coloration unlike a case of using a phenol resin. Besides, since no formaldehyde is contained as a material, it is favorable in view of flavor retention.

Examples of the curing agent formed of the β-hydroxyalkylamide compound include the component represented by the following General Formula [I].

General Formula [I] $[HO-CH(R_1)-CH_2-N(R_2)-CO-]_m-A-[-CO-N(R_2')-CH_2-CH(R_1')-OH]_n$

In the formula, $R_1$ and $R_1'$ each represents a hydrogen atom or an alkyl group with 1-5 carbon atoms; $R_2$ and $R_2'$ each represents a hydrogen atom or an alkyl group with 1-5 carbon atoms, or a component represented by General Formula [II] below; "A" represents a polyvalent organic group; m represents 1 or 2; and n represents 0 to 2 (the sum of m and n is at least 2).

General Formula [II] $HO-CH(R_3)-CH_2-$

In the formula, $R_3$ represents a hydrogen atom or an alkyl group with 1-5 carbon atoms.

In General Formula [I], "A" is preferably an aliphatic, alicyclic or aromatic hydrocarbon. More preferably, it is an aliphatic, alicyclic or aromatic hydrocarbon with 2-20 carbon atoms, and still more preferably, an aliphatic hydrocarbon with 4-10 carbon atoms.

The sum of m and n in General Formula [I] is preferably 2, 3 or 4.

Among the components that can be represented by General Formula [I], particularly preferred examples of the β-hydroxyalkylamide compound to be used as the curing agent include: N,N,N',N'-tetrakis(2-hydroxyethyl)adipoamide [CAS: 6334-25-4, molecular weight: about 320, number of functional groups per molecule: 4, functional group equivalent (theoretical value): about 80 g/eq, product example: Primid XL552 manufactured by EMS-GRILTECH Co., Ltd.]; and N,N,N',N'-tetrakis(2-hydroxypropyl)adipoamide [CAS: 57843-53-5, molecular weight: about 376, number of functional groups per molecule: 4, functional group equivalent (theoretical value): about 95 g/eq, product example: Primid QM1260 manufactured by EMS-GRILTECH Co., Ltd.]. Among them, N,N,N',N'-tetrakis(2-hydroxypropyl)adipoamide is used preferably from the viewpoint of curability and retort resistance. Since N,N,N',N'-tetrakis(2-hydroxypropyl)adipoamide has higher reactivity with the polyester resin to achieve better curability and forms a denser crosslinked structure than N,N,N',N'-tetrakis(2-hydroxyethyl)adipoamide, it is possible to form a coating with excellent retort resistance that may be hardly whitened during a retort treatment.

[Carbodiimide group-containing compound]

An example of the carbodiimide group-containing compound is a resin having a carbodiimide group in its molecule. Such a resin is commercially available under the following trade names, for example: "CARBODILITE V-02", "CARBODILITE V-02-L2", "CARBODILITE V-04", "CARBODILITE E-01", and "CARBODILITE E-02", each of which is manufactured by Nisshinbo Chemical Inc.

[Oxazoline group-containing curing agent]

An example of the curing agent having an oxazoline group is a water-soluble polymer obtained by polymerizing a monomer composition containing an oxazoline derivative. Examples of the oxazoline derivative include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. The monomer composition containing the oxazoline derivative may contain monomers other than the oxazoline derivative; such monomer compounds are not limited particularly as long as they are copolymerized with the oxazoline derivative and are inactive to the oxazoline group. The percentage of the constituent unit derived from the oxazoline derivative in the oxazoline group-containing polymer is preferably not less than 5% by mass. Specific examples include "EPOCROS WS-300" [number average molecular weight: about 40,000, functional group (oxazoline) equivalent: about 130 g/eq], and "EPOCROS WS-700" [number average molecular weight: about 20,000, functional group (oxazoline) equivalent: about 220 g/eq], each of which is manufactured by NIPPON SHOKUBAI CO., LTD.

It is desirable that the curing agent is blended in an amount of 1 to 20 parts by mass, preferably 2 to 15 parts by mass, more preferably 3 to 10 parts by mass, and particularly preferably 3 to 8 parts by mass with respect to 100 parts by mass of the polyester resin (solid content). When the blend amount of the curing agent is smaller than this range, sufficient curability cannot be obtained. When the blend amount of the curing agent is larger than the range, economic efficiency may deteriorate. Besides, when the curing agent has an excessively large amount of functional groups relative to the amount of carboxyl groups of the polyester resin, it will be difficult for each molecule of the curing agent to react with two or more molecules of the polyester resin. This may cause defects in crosslink formation, resulting in decreased curability. In addition, stability in long-term storage may deteriorate.

When the β-hydroxyalkylamide compound is used as the curing agent, it is desirable that the equivalent ratio of the hydroxyl group derived from the β-hydroxyalkylamide group of the curing agent to the carboxyl group amount of the polyester resin (molar ratio of OH group/COOH group) is in a range of 0.3 to 3.0 times equivalent, preferably 0.5 to 2.5 times equivalent, and more preferably 0.8 to 2.0 times equivalent.

(Coating composition)

The coating composition of the present invention contains the above-described polyester resin as a base resin and the above-described curing agent. In the present invention, the component defined as the base resin (main component) is the component of the highest content (mass ratio) among the solid components (nonvolatile components excluding volatile substances such as water and a solvent) for forming the coating in the coating composition. The solid components for forming the coating as used herein refer to components that form a continuous layer as the coating by baking conducted after coating, and do not embrace components that do not form the continuous layer, such as an inorganic pigment and an inorganic particle (filler) .

Examples of the type of the coating composition of the present invention may include an aqueous coating composition, a solvent based coating composition, and a powder coating composition. From the viewpoint of handleability, workability and the like, an aqueous coating composition is desirable.

(Aqueous coating composition)

In a case where the coating composition of the present invention is an aqueous coating composition, it contains an aqueous medium together with the polyester resin and the curing agent as described above.

(Aqueous medium)

For the aqueous medium, water or a mixture of water and an organic solvent such as alcohol or polyhydric alcohol, or a derivative thereof can be used in the same manner as in a case of preparing a well-known aqueous coating composition. In a case of using an organic solvent, the solvent is contained preferably in an amount of 1% to 45% by mass, particularly preferably 5% to 30% by mass relative to the entire aqueous medium in the aqueous coating composition. The solvent contained in this range improves film formation performance.

The organic solvent preferably possesses amphiphilicity. Examples thereof include methyl alcohol, ethyl alcohol, isopropyl alcohol, n-butanol, ethylene glycol, methyl ethyl ketone, butyl cellosolve, carbitol, butyl carbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

(Basic compound)

The aqueous coating composition preferably contains a basic compound capable of neutralizing the carboxyl group of the polyester resin so that water dispersibility or water solubility can be imparted to the polyester resin. The basic compound is preferably a compound that can volatilize by baking for forming the coating, such as ammonia and/or an organic amine compound having a boiling point of not higher than 250°C.

Specific examples that can be used here include: alkylamines such as trimethylamine, triethylamine, and n-butylamine; and alcoholic amines such as 2-dimethylaminoethanol, diethanolamine, triethanolamine, aminomethylpropanol, and dimethylaminomethylpropanol. Also, polyvalent amines such as ethylenediamine and diethylenetriamine can be used. Further, amines having branched chain alkyl groups or heterocyclic amines are also suitably used. As the amine having a branched chain alkyl group, branched chain alkylamine with 3-6 carbon atoms, and particularly branched chain alkylamine with 3-4 carbon atoms can be used, such as isopropylamine, sec-butylamine, tert-butylamine, and isoamylamine. As the heterocyclic amine, saturated heterocyclic amine containing one nitrogen atom can be used, such as pyrrolidine, piperidine, and morpholine.

Among the aforementioned examples, triethylamine or 2-dimethylaminoethanol can be suitably used in the present invention. The use amount is preferably in a range of 0.5 to 1.5 equivalents relative to the carboxyl group.

(Lubricant)

The coating composition used in the present invention may contain a lubricant if necessary. It is preferable to add 0.1 to 10 parts by mass of lubricant to 100 parts by mass of polyester resin.

Addition of the lubricant serves to prevent scratches on the coating during the working for forming a can lid and the like, and improve slidability of the coating during the working for formation.

Examples of the lubricant that can be added to the coating composition include a fatty acid ester wax as an esterified product of a polyol compound and fatty acid, a silicon-based wax, a fluorine-based wax such as polytetrafluoroethylene, a polyolefin wax such as polyethylene, a paraffin wax, lanolin, a montan wax, a microcrystalline wax, a carnauba wax, a silicon-based compound, and petrolatum. Each of these lubricants can be used singly or as a mixture of at least two thereof.

(Others)

The coating composition used in the present invention can further contain other components that have been blended in a conventional coating composition in accordance with a conventional and well-known formulation, such as a leveling agent, a pigment, and a defoaming agent.

The polyester resin may be contained with any other resin component in a range not to hinder the object of the present invention. Examples thereof may include water-dispersible or water-soluble resins such as polyvinyl acetate, an ethylene·vinyl acetate copolymer, a polyolefinbased resin, an epoxy resin, a polyurethane resin, an acrylic resin, a phenol resin, a melamine resin, a polyvinyl chloride-based resin, a polyvinyl chloride-vinyl acetate copolymer resin, polyvinyl alcohol, an ethylene·vinyl alcohol copolymer, polyvinyl pyrrolidone, polyvinyl ethyl ether, polyacrylamide, an acrylamide-based compound, polyethyleneimine, starch, gum arabic, and methylcellulose.

In the above-described aqueous coating composition, the polyester resin as a solid content is suitably contained in an amount of 5% to 55% by mass. When the resin solid content is smaller than this range, an appropriate coating amount cannot be provided reliably, so that coatability may deteriorate. When the resin solid content is larger than the range, workability and coating applicability may deteriorate.

(Coated metal substrate)

The coated metal substrate of the present invention is obtained by coating a metal substrate such as a metal sheet or a metal container with the coating composition of the present invention. The coated metal substrate of the present invention is characterized as follows: the coated metal substrate has a coating on at least one surface of the metal substrate; the coating contains a polyester resin and a curing agent having a functional group capable of crosslinking reaction with a carboxyl group; and the coating has at least two glass transition temperatures. In the coating formed by coating and baking the coating composition of the present invention on a metal substrate, at least two components, i.e., the crosslinked component formed mainly of the polyester resin (A) and the uncrosslinked component formed mainly of the polyester resin (B), are not compatible with each other and are phase separated (sea-island state). Namely, the coating establishes a state where glass transition temperatures derived from at least the two components are present. This helps to further enhance the above-described effect that can-making workability and resistance against coating delamination can be improved.

The coating may be provided with glass transition temperatures of two or more incompatible components before crosslink formation. However, it is preferable that the coating as a compatible single layer before crosslink formation is gradually separated to have glass transition temperatures of two or more components by phase separation caused by a crosslinking reaction mainly between the polyester resin (A) and the curing agent. Accordingly, the dispersion diameter of the domain formed mainly of the polyester resin (B) in the coating can be reduced, which allows the above-described effect to be achieved easily and enables formation of a transparent coating free from white turbidity.

In the present invention, it is preferable that the coating has at least two glass transition temperatures that fall between -70°C and 120°C. Among them, the lowest glass transition temperature desirably falls within a range of -70°C to 80°C, preferably -50°C to 60°C, more preferably -40°C to 50°C, and particularly preferably not lower than -40°C to lower than 40°C. It is favorable that the glass transition temperatures other than the lowest glass transition temperature fall within a range of 20°C to 120°C, preferably 30°C to 100°C, and more preferably 40°C to 90°C. In particular, the coating preferably has a glass transition temperature ($Tg_A$) between 40°C and 90°C and a glass transition temperature ($Tg_B$) between not lower than - 40°C and lower than 40°C.

(Method for producing coated metal substrate)

The coating composition of the present invention is coated on a metal substrate such as a metal sheet, a metal container, or a metal lid by any of well-known coating methods such as roll coater coating, spray coating, and dip coating, or alternatively in a case of a powder coating composition, electrostatic powder coating, and fluidized bed coating. Then, the coating composition is baked by a heater such as an oven. Thus, the coated metal substrate such as a coated metal sheet, a coated metal container, or a coated metal lid can be obtained. As described later, the thus-obtained coated metal sheet can be shaped to make a coated metal container such as a drawn-ironed can as well as a coated metal lid.

The conditions for baking the coating composition are appropriately adjusted according to the type of the polyester resin, the type of the curing agent, the type and shape of the metal substrate, the coating amount of the coating composition and the like. In order to achieve sufficient curability, it is favorable that the coating composition is subjected to curing with heat under conditions of a baking temperature of 150°C to 350°C, preferably higher than 200°C and not higher than 320°C, for not less than 5 seconds, preferably 5 seconds to 30 minutes, and particularly preferably 8 to 180 seconds.

In a case where the coating composition is an aqueous coating composition or a solvent based coating composition, it is suitable that the coating to be formed has a thickness of less than 30 $\mu$m, preferably in a range of 0.5 to 20 $\mu$m, more preferably more than 2 $\mu$m and not more than 15 $\mu$m, and further preferably 3 to 14 $\mu$m in terms of dry film thickness. In a case where the coating composition is a powder coating material, the coating preferably has a thickness in a range of 30 to 150 $\mu$m.

Examples of the metal sheet to be used as the metal substrate include a hot-rolled steel sheet, a cold-rolled steel sheet, a hot dip galvanized steel sheet, an electrogalvanized steel sheet, an alloy-plated steel sheet, an aluminum-zinc alloy-plated steel sheet, an aluminum sheet, a tin-plated steel sheet, a stainless steel sheet, a copper sheet, a copper-plated steel sheet, a tin-free steel sheet, a nickel-plated steel sheet, an ultra-thin tin-plated steel sheet, and a chromium-treated steel sheet, though the present invention is not limited to these examples. The metal sheet to be used can be subjected to various surface treatments as required. Examples of the surface treatments include chemical conversion treatments using phosphate chromate, zirconium or the like and coating-type treatments using a combination of a water-soluble resin such as polyacrylic acid and a zirconium salt such as ammonium zirconium carbonate.

It is also possible to form an organic resin-coated metal sheet by further laminating a thermoplastic resin film such as a polyester resin film as an organic resin coating layer on the coating of the aforementioned metal sheet.

(Drawn-ironed can)

A drawn-ironed can formed of the coated metal substrate (coated metal sheet) of the present invention can be produced by a conventionally-known method as long as the aforementioned coated metal sheet is used. Since the coating formed of the coating composition of the present invention has excellent workability and adhesiveness, it is possible to form a drawn-ironed can without causing body rupture or delamination of the coating at the mouth of a can even during severe drawing-ironing. Since the coated metal sheet of the present invention is excellent in formability and lubricity, it can be shaped to make a drawn-ironed can by use of a liquid coolant, and also under dry conditions without the use of a liquid coolant.

Prior to drawing and ironing, the surface of the coated metal sheet is preferably applied with a wax-based lubricant such as a paraffin-based wax, white petrolatum, a palm oil, various natural waxes, or a polyethylene wax, thereby allowing efficient drawing and ironing to be conducted under dry conditions. A resin-coated aluminum sheet applied with a wax-based lubricant is blanked with a cupping press, which is then drawn to form a drawn cup. In the present invention, it is desirable that the drawing ratio RD defined by the Equation (2) below is within a range of 1.1 to 2.6, particularly 1.4 to 2.6 in total (up to a drawn-ironed can). When the drawing ratio is larger than this range, drawing wrinkles may grow to cause cracks on the coating, resulting in metal exposure.

$$RD = D/d \ \ldots \ (2)$$

In the equation, D represents the blank diameter, and d represents the can body diameter.

Next, the drawn cup is redrawn-ironed. Here, the ironing may be conducted at one stage or several stages. In the present invention, the temperature of the shaping punch during this working is preferably controlled within a range of 10°C to 80°C.

In the present invention, it is desirable that the ironing rate R expressed by the following Equation (3) is in a range of 25% to 80%. When the ironing rate is lower than this range, the thickness cannot be decreased sufficiently, and economic efficiency may be unsatisfactory. When the ironing rate is higher than the range, metal exposure may occur during seaming and the like.

$$R\ (\%) = (tb-tw)/tb \times 100 \ ...\ (3)$$

In the equation, tb represents the thickness of the original metal sheet, and tw represents the thickness of the central portion of the can body side wall of the drawn-ironed can.

In the drawn-ironed can of the present invention, it is suitable that the thickness of the central portion of the can body side wall is 20% to 75%, preferably 30% to 60% of the thickness of the can bottom (the central portion).

For the obtained drawn-ironed can, the bottom is domed, and the opening edge is trimmed in the usual manner.

The obtained drawn-ironed can is subjected to at least one stage of heat treatment, thereby removing the residual strain of the coating caused by the working, or drying and curing a printing ink printed on the surface. After the heat treatment, the can is quenched or allowed to cool, and as required, it is subjected to at least one stage of neck-in working, followed by flange working, thereby providing a can to be seamed. Alternatively, the upper part of the thus formed drawn-ironed can may be deformed to a bottle, or alternatively the bottom may be cut off to be replaced with another can end for forming a bottle.

Since the coated metal substrate (coated metal sheet) of the present invention has excellent can-making workability, it can withstand severe working for producing a drawn-ironed can, and thus is capable of forming a drawn-ironed can excellent in corrosion resistance without metal exposure. The coated metal sheet of the present invention can naturally exhibit workability sufficient enough to form a less worked product than a drawn-ironed can. Thus, the application of the coated metal sheet of the present invention is not limited to the drawn-ironed can, but it can also be applied suitably to a drawn can (DR can), a deep-drawn can (DRD can), a drawn thin-redrawn can (DTR can), a tensile drawn-ironed can, a can lid and the like to be formed by conventionally-known methods. As for a can lid, any conventionally-known shape can be employed, for instance, an easy-open lid provided with a score for forming an opening to dispense the content and also a tab for can-opening. It can be either a full-open type or a partial-open type (stay-on-tab type).

Examples:

Hereinafter, the present invention will be specified with reference to Examples and Comparative Examples. In the Examples, the term "part" indicates "part by mass".

Respective measurement items for the polyester resin (A) are described below. The polyester resin (A) is an acrylic unmodified polyester resin.

(Measurement of number average molecular weight)

A solid polyester resin was measured by using a calibration curve of standard polystyrene based on gel permeation chromatography (GPC).

(Measurement of glass transition temperature)

A solid polyester resin was measured by using a differential scanning calorimeter (DSC).

(Measurement of acid value)

1.0 g of solid polyester resin was dissolved in 10 ml of chloroform, which was titrated with a 0.1 N KOH-ethanol solution, and its resin acid value (mgKOH/g) was determined. Phenolphthalein was used as an indicator. A solvent such as tetrahydrofuran was used for a polyester resin not dissoluble in the chloroform.

(Measurement of monomer composition)

30 mg of solid polyester resin was dissolved in 0.6 ml of deuterated chloroform, which was subjected to a 1H-NMR measurement, and the monomer composition ratio was determined from the peak intensity. The composition ratio was determined except for trace components (less than 1 mol% based on the total monomer component).

(Preparation of coated metal sheet)

The aqueous coating composition in each Example or Comparative Example was used to prepare a coated metal sheet. The coatings on the inner surface and the outer surface of the metal sheet were formed by using the coating composition of the same production example. The metal sheet used here was a chromate phosphoric acid-based surface-treated aluminum sheet (3104 alloy, thickness: 0.28 mm, chromium weight in surface treatment film: 20 mg/m$^2$). First, the surface to make the outer surface after formation was coated with the aqueous coating composition by use of a bar coater so that the coating thickness after baking would be 3 $\mu$m, and dried at 120°C for 60 seconds. Later, the opposite surface to make the inner surface was coated with the aqueous coating composition by use of a bar coater so that the coating thickness after baking would be 9 $\mu$m, and baked at 250°C for 60 seconds.

The performance of the coating obtained from the coating composition in each Example or Comparative Example, and further the coated metal sheet obtained in the above-described manner in each Example, Comparative Example or Reference Example were tested in accordance with the test methods described below. The results are shown in Table 1.

[Glass transition temperature of coating (coating Tg)]

The aqueous coating composition used in each Example, Comparative Example or Reference Example was coated with a bar coater on an aluminum foil so that the film thickness after baking would be 9 $\mu$m, which was baked at 250°C for 60 seconds, thereby forming a coating on the aluminum foil. Next, the aluminum foil with the coating thereon was immersed in a diluted aqueous hydrochloric acid solution to dissolve the aluminum foil, and a film-like coating was taken out. The coating was sufficiently washed in diluted water and dried to make a measurement sample. The glass transition temperature of the thus obtained coating was measured by using a differential scanning calorimeter (DSC) under the conditions mentioned below. The glass transition temperature of the coating (coating Tg) was determined as the extrapolated glass transition starting temperature. This temperature is indicated by the intersection of the straight line obtained by extending the base line on the low temperature side toward the high temperature side and the tangent drawn at a point where the gradient of the curve of the stepwise change portion of the glass transition is maximum, in 2nd-run (temperature rise).

Instrument: DSC6220 manufactured by Seiko Instruments Inc.

Sample volume: 5 mg

Temperature rise rate: 10°C/min

Temperature range: -80°C to 200°C (temperature rise, cooling, temperature rise)

Ambient conditions: under nitrogen stream

It is also possible to obtain a measurement sample from a metal sheet having coatings formed on both surfaces. In this case, the coating on the surface opposite to the surface for measurement is removed, i.e., scraped with a sand paper or the like. Later, the metal substrate (metal sheet) was dissolved in the usual manner, for instance, by immersing the sheet in a diluted aqueous hydrochloric acid solution. Then, a film-like free coating was taken out, washed sufficiently with diluted water and dried, thereby obtaining a measurement sample.

(Curability)

Curability of the coating was evaluated based on the MEK extraction rate. The aqueous coating composition in each Example or Comparative Example was coated with a bar coater on a chromate phosphoric acid-based surface-treated aluminum sheet (3104 alloy, thickness: 0.28 mm, chromium weight in surface treatment film: 20 mg/m$^2$) so that the film thickness after baking would be 9 $\mu$m. This was baked at 250°C for 60 seconds. In this manner, the coated metal sheet was produced. A test piece of 5 cm $\times$ 5 cm was cut out from the coated metal sheet. After the mass (W1) of the test piece was measured, it was immersed in 200 ml of boiling MEK (methyl ethyl ketone) for 1 hour under 80°C reflux, and a one-hour MEK extraction was conducted at the boiling point. After the extraction, the coated sheet was washed with MEK and dried at 120°C for 1 minute. Then, the mass (W2) of the test piece after the extraction was measured. Further, the coating was delaminated by a decomposition method using concentrated sulfuric acid, and the mass (W3) of the test piece was measured. The MEK extraction rate of the coated sheet can be determined by the following Equation (4).

```
MEK extraction rate (%) = 100 × (W1-W2) / (W1-W3) ...
(4)
```

Evaluation criteria are as follows.

◎: less than 20%

O: not less than 20% and less than 30%

Δ: not less than 30% and less than 45%

×: not less than 45%

(Production of drawn-ironed can)

A coated metal sheet was prepared by the aforementioned method. On both surfaces of the coated metal sheet, a paraffin wax was applied. Then, the coated metal sheet was punched out to shape a circle with a diameter of 142 mm, and a shallow-drawn cup was formed. The shallow-drawn cup was then subjected to further working by use of a hydraulic press. Namely, by running a punch at a rate of 1 m/s under dry conditions, the shallow-drawn cup was first subjected to re-drawing. Next, three steps of ironing were conducted before doming. Here, the punch had an outer diameter of Φ66 mm and was equipped with a temperature-regulator. In this manner, a drawn-ironed can having a total drawing ratio of 2.15 and an ironing rate of 64% was obtained. The can height was about 130 mm, and the thickness of the central portion of the can body side wall was 38.5% of the thickness of the central portion of the can bottom.

(Can-making workability evaluation)

For the thus-obtained drawn-ironed can, coatability (degree of metal exposure) of the inner coating after formation was evaluated by a copper sulfate test. In the test, the can body was filled with a copper sulfate aqueous solution to the height lower by about 10 mm from the flange. Here, the solution was the one prepared by mixing 20 parts of copper (II) sulfate pentahydrate, 70 parts of deionized water, and 10 parts of hydrochloric acid (36%). The can was allowed to stand for about 2 minutes. Then, the copper sulfate aqueous solution was discharged from the can body, and the can body was washed with water and cut open. The degree of metal exposure was observed with reference to the degree of precipitation of copper on the inner surface, thereby evaluating the can-making workability.

Evaluation criteria are as follows.

◎: No metal exposure is found.

O: Slight metal exposure is found at a site of the can body side wall that has been worked most severely to have a decreased thickness.

Δ: Partial metal exposure is found at a site of the can body side wall that has been worked most severely to have a decreased thickness.

×: Metal exposure is found in most part of a site of the can body side wall that has been worked most severely to have a decreased thickness.

(Evaluation of resistance against coating delamination)

The drawn-ironed can obtained as described above was subjected to a heat treatment, and the degree of delamination of the inner coating after the heat treatment was evaluated. The formed can body was heat-treated by using an oven at 201°C for 75 seconds and then cut open. The degree of delamination of the coating was observed and evaluated.

Evaluation criteria are as follows.

◎: No coating delamination is found.

O: Partial coating delamination is found at a site of the can body side wall that has been worked most severely to have a decreased thickness.

Δ: Coating delamination is found at a site of the can body side wall that has been worked most severely to have a decreased thickness.

×: Coating delamination is found in a wide-ranging area of the can body side wall.

(Preparation of aqueous coating composition)

(Example 1)

The polyester resin (A) was a polyester resin (A)-a (acid value: 23 mgKOH/g, Tg: 80°C, Mn = 8,000, monomer composition: terephthalic acid component/ethylene glycol component/propylene glycol component = 50/10/40 mol%), and a polyester resin (A)-c (Tg: -25°C, Mn = 17,000, acid value: 11 mgKOH/g, monomer composition: terephthalic acid component/isophthalic acid component/sebacic acid component/1,4-butanediol component = 14/17/19/50 mol%). The polyester resin (B) was "PLAS COAT Z-880" (sulfonic acid group-containing type, molecular weight: about 15,000, Tg: 20°C, acid value: lower than 5 mgKOH/g, expressed as polyester resin (B)-a in Table) manufactured by GOO CHEMICAL CO., LTD. The β-hydroxyalkylamide compound used as the curing agent was N,N,N',N'-tetrakis(2-hydroxypropyl)adipoamide ("Primid QM1260" manufactured by EMS-GRILTECH Co., Ltd.) Here, 333 parts (solid content: 100 parts) of a water dispersion liquid of a mixed polyester resin (resin solid content concentration: 30% by mass, isopropyl alcohol concentration: 18% by mass) obtained by mixing the polyester resin(A)-a, the polyester resin(A)-c, and the polyester resin(B)-a at a solid content mass ratio of 73:18:9, and 16.7 parts (solid content: 5 parts) of an aqueous solution of the β-hydroxyalkylamide compound (solid content concentration: 30% by mass) adjusted in advance by using ion-exchanged water were introduced into a glass container and stirred for 10 minutes to obtain an aqueous coating composition having a solid content concentration of 30% by mass and a solid content blend ratio of polyester resin/curing agent of 100/5 (mass ratio).

(Examples 2-15, Comparative Examples 1-4)

Aqueous coating compositions were prepared in the same manner as in Example 1 except that the polyester resins or the solid content blend ratios were as shown in Table 1. In addition to the aforementioned polyester resins, the following polyester resins were used. As the polyester resin (A), a polyester resin (A)-b (Tg: 80°C, Mn = 5,000, acid value: 36 mgKOH/g) was used. As the polyester resin B, the following polyester resins were used: "PLAS COAT Z-3310" (sulfonic acid group-containing type, molecular weight: about 15,000, Tg: -20°C, acid value: lower than 5 mgKOH/g, expressed as polyester resin (B)-b in Table) manufactured by GOO CHEMICAL CO., LTD.; "Bironal MD-1100" (number average molecular weight: 20,000, Tg: 40°C, acid value: lower than 3 mgKOH/g, hydroxyl value: 5 mgKOH/g, expressed as polyester resin (B)-c in Table) manufactured by TOYOBO CO., LTD.; "Bironal MD-1335" (number average molecular weight: 8,000, Tg: 4°C, acid value: lower than 3 mgKOH/g, hydroxyl value: 13 mgKOH/g, expressed as polyester resin (B)-d in Table) manufactured by TOYOBO CO., LTD.; "Bironal MD-1930" (number average molecular weight: 20,000, Tg: -10°C, acid value: lower than 3 mgKOH/g, hydroxyl value: 5 mgKOH/g, expressed as polyester resin (B)-e in Table) manufactured by TOYOBO CO., LTD.; "Bironal MD-1985" (number average molecular weight: 25,000, Tg: - 20°C, acid value: lower than 3 mgKOH/g, hydroxyl value: 4 mgKOH/g, expressed as polyester resin (B)-f in Table) manufactured by TOYOBO CO., LTD.; and "Bironal MD-1480" (number average molecular weight: 15,000, Tg: 20°C, acid value: 3 mgKOH/g, hydroxyl value: 4 mgKOH/g, expressed as polyester resin (B)-g in Table) manufactured by TOYOBO CO., LTD.

Table 1 shows the composition of the aqueous coating composition (type of polyester resin, type of curing agent, solid content blend ratio, and the like), the coating performance (coating Tg), and evaluation results of the coated metal sheet in each Example and Comparative Example.

[Table 1-1]

| | | | Tg (°C) | Acid value (mKOH/g) | Mn | Example | | | | | | | | | |
|---|---|---|---|---|---|---|---|---|---|---|---|---|---|---|---|
| | | | | | | 1 | 2 | 3 | 4 | 5 | 6 | 7 | 8 | 9 | 10 |
| Blend composition of aqueous coating composition | Polyester resin (A) | (A)-a | 80 | 23 | 8,000 | 73 | 66 | 62 | 73 | 62 | 66 | 64 | 64 | 64 | 58 |
| | | (A)-b | 80 | 36 | 5,000 | | | | | | | | | | |
| | | (A)-c | -25 | 11 | 17,000 | 18 | 17 | 15 | 18 | 15 | 17 | 27 | 27 | 27 | 25 |
| | | $Tg_{mix}$ (°C) | | | | 52 | 52 | 52 | 52 | 52 | 52 | 40 | 40 | 40 | 40 |
| | | $AV_{mix}$ (mgKOH/g) | | | | 21 | 21 | 21 | 21 | 21 | 21 | 19 | 19 | 19 | 19 |
| | Polyester resin (B) | (B)-a | 20 | <5 | 15,000 | 9 | 17 | 23 | | | | | | | |
| | | (B)-b | -20 | <5 | 15,000 | | | | 9 | 23 | | | | | |
| | | (B)-c | 40 | <3 | 20,000 | | | | | | 17 | | | | 17 |
| | | (B)-d | 4 | <3 | 8,000 | | | | | | | 9 | | | |
| | | (B)-e | -10 | <3 | 20,000 | | | | | | | | 9 | | |
| | | (B)-f | -20 | <3 | 25,000 | | | | | | | | | 9 | |
| | | (B)-g | 20 | 3 | 15,000 | | | | | | | | | | |
| | Curing agent | β-hydroxyalkylamide | | | | 5 | 5 | 5 | 5 | 5 | 5 | 5 | 5 | 5 | 5 |
| | Coating Tg (°C) | | | | | 14/42 | 19/50 | 13/51 | -14/40 | -19/37 | 38/54 | 6/34 | -21/35 | -21/35 | 37/44 |
| Evaluation | Curability | | | | | ◎ | ◎ | ○ | ◎ | ○ | ◎ | ◎ | ◎ | ◎ | ◎ |
| | Can-making workability | | | | | ◎ | ◎ | ◎ | ◎ | ◎ | ◎ | ◎ | ◎ | ◎ | ◎ |
| | Resistance against coating delamination | | | | | Δ | ○ | ◎ | ○ | ◎ | ○ | ◎ | ◎ | ◎ | ◎ |

16

[Table 1-2]

| Blend composition of aqueous coating composition | | | Tg (°C) | Acid value (mgKOH/g) | Mn | Example | | | | | Comparative Example | | | |
|---|---|---|---|---|---|---|---|---|---|---|---|---|---|---|
| | | | | | | 11 | 12 | 13 | 14 | 15 | 1 | 2 | 3 | 4 |
| | Polyester resin (A) | (A)-a | 80 | 23 | 8,000 | 58 | 70 | 60 | 70 | | 100 | 80 | 70 | 50 |
| | | (A)-b | 80 | 36 | 5,000 | | | | | 66 | | | | |
| | | (A)-c | -25 | 11 | 17,000 | 25 | | | | 17 | | 20 | 30 | |
| | | $Tg_{mix}$ (°C) | | | | 40 | - | - | - | 52 | - | 52 | 40 | - |
| | | $AV_{mix}$ (mgKOH/g) | | | | 19 | - | - | - | 31 | - | 21 | 19 | - |
| | Polyester resin (B) | (B)-a | 20 | <5 | 15,000 | | | | | | | | | |
| | | (B)-b | -20 | <5 | 15,000 | | | | | | | | | |
| | | (B)-c | 40 | <3 | 20,000 | | | | | | | | | |
| | | (B)-d | 4 | <3 | 8,000 | | 30 | 40 | | 17 | | | | 50 |
| | | (B)-e | -10 | <3 | 20,000 | | | | | | | | | |
| | | (B)-f | -20 | <3 | 25,000 | | | | 30 | | | | | |
| | | (B)-g | 20 | 3 | 15,000 | 17 | | | | | | | | |
| | Curing agent | β-hydroxyalkylamide | | | | 5 | 5 | 5 | 5 | 5 | 5 | 5 | 5 | 5 |
| Coating Tg (°C) | | | | | | 22/42 | 7/59 | 10/48 | -18/60 | 1*) | 89 | 50 | 39 | 9/43 |
| Evaluation | Curability | | | | | ◎ | ○ | Δ | ○ | ◎ | ◎ | ◎ | ◎ | × |
| | Can-making workability | | | | | ◎ | ◎ | ◎ | ◎ | ○ | x | ○ | ◎ | ◎ |
| | Resistance against coating delamination | | | | | ◎ | ○ | ○ | ○ | Δ | × | × | × | ◎ |
| 1*): Not evaluated | | | | | | | | | | | | | | |

17

Industrial Applicability:

The coating composition of the present invention is capable of forming a coating that has excellent can-making workability to be subjected to severe working such as drawing and ironing under dry conditions, and also has excellent resistance against coating delamination so that it can be prevented from delamination or peeling even during a heat treatment conducted after can formation. Therefore, the coating composition can be used suitably for forming a coating of a coated metal substrate to be used for making a drawn-ironed can and the like.

**Claims**

1. A coating composition containing a polyester resin (A) having an acid value of not lower than 5 mgKOH/g, a polyester resin (B) having an acid value of lower than 5 mgKOH/g, and a curing agent having a functional group capable of crosslinking reaction with a carboxyl group, wherein assuming that a total solid content mass of the polyester resin (A) and the polyester resin (B) is 100 parts by mass, a content of the polyester resin (A) is in a range of more than 50 parts by mass to not more than 97 parts by mass, and a content of the polyester resin (B) is in a range of not less than 3 parts by mass to less than 50 parts by mass.

2. The coating composition according to claim 1, wherein the curing agent is at least one selected from the group of a β-hydroxyalkylamide compound, an oxazoline group-containing compound, and a carbodiimide group-containing compound.

3. The coating composition according to claim 2, wherein the curing agent is a β-hydroxyalkylamide compound.

4. The coating composition according to any one of claims 1 to 3, wherein the acid value of the polyester resin (A) is 10 to 70 mgKOH/g.

5. The coating composition according to any one of claims 1 to 4, wherein the acid value of the polyester resin (B) is lower than 3 mgKOH/g.

6. The coating composition according to claim 5, wherein the polyester resin (B) is a sulfonic acid group-containing polyester resin.

7. The coating composition according to claim 1 being an aqueous coating composition.

8. A coated metal substrate provided with a coating formed of the coating composition according to any one of claims 1 to 7.

9. A coated metal substrate having a coating on at least one surface of the metal substrate, wherein the coating contains a polyester resin as a base resin and a β-hydroxyalkylamide compound as a curing agent, and the coating has two or more glass transition temperatures.

10. The coated metal substrate according to claim 9, wherein the two or more glass transition temperatures of the coating fall between -70°C and 120°C, among which the lowest glass transition temperature falls within a range of -70°C to 80°C.

11. The coated metal substrate according to claim 9 or 10, wherein the coating has a thickness of less than 30 μm.

12. A drawn-ironed can formed of the coated metal substrate according to any one of claims 8 to 11.

## INTERNATIONAL SEARCH REPORT

International application No.

PCT/JP2019/044008

### A. CLASSIFICATION OF SUBJECT MATTER
B32B 27/36(2006.01)i; C09D 5/02(2006.01)i; C09D 167/00(2006.01)i; B32B 15/09(2006.01)i; B32B 1/02(2006.01)i
FI: C09D167/00; C09D5/02; B32B1/02; B32B15/09 A; B32B27/36
According to International Patent Classification (IPC) or to both national classification and IPC

### B. FIELDS SEARCHED

Minimum documentation searched (classification system followed by classification symbols)
B32B27/36; C09D5/02; C09D167/00; B32B15/09; B32B1/02

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-39626 A (BASF COATINGS JAPAN LTD.) | 1, 4-5, 7-8 |
| A | 26.02.2009 (2009-02-26) comparative example 3, paragraphs [0034]-[0048] | 2-3, 6, 9-12 |
| | | |
| X | JP 2014-133778 A (DIC GRAPHICS CORPORATION) | 1, 5, 8, 12 |
| A | 24.07.2014 (2014-07-24) claims 1, 4, examples 3-12, paragraphs [0013], [0028]-[0042] | 2-4, 6-7, 9-11 |
| | | |
| X | JP 2013-249376 A (TOYO SEIKAN CO., LTD.) | 1, 4-5, 7-8, 12 |
| Y | 12.12.2013 (2013-12-12) claims 1, 3, 7, 9, example 8, paragraphs [0019]-[0021], [0027], [0031], | 6 |
| A | [0048]-[0054] | 2-3, 9-11 |
| | | |
| Y | JP 2017-25318 A (DOW GLOBAL TECHNOLOGIES LLC) | 6 |
| A | 02.02.2017 (2017-02-02) paragraph [0100], examples | 1-5, 7-12 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| 22 January 2020 (22.01.2020) | 04 February 2020 (04.02.2020) |
| Name and mailing address of the ISA/ | Authorized officer |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/044008

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2014-514370 A (DOW GLOBAL TECHNOLOGIES LLC)<br>19.06.2014 (2014-06-19) claims 1, 3, 10, examples,<br>paragraphs [0070]-[0071], [0090]-[0094], [0099]-<br>[0114], [0129] | 9-12<br>1-8 |
| A | JP 2015-168760 A (KANSAI PAINT CO., LTD.)<br>28.09.2015 (2015-09-28) entire text | 1-12 |
| A | JP 2006-501108 A (VALSPAR SOURCING, INC.)<br>12.01.2006 (2006-01-12) entire text | 1-12 |

Form PCT/ISA/210 (continuation of second sheet) (January 2015)

INTERNATIONAL SEARCH REPORT

Information on patent family members

International application No.

PCT/JP2019/044008

| Patent Documents referred in the Report | Publication Date | Patent Family | Publication Date |
|---|---|---|---|
| JP 2009-39626 A | 26 Feb. 2009 | US 2011/0045192 A1 comparative example 3, paragraphs [0071]-[0085]<br>WO 2009/019547 A2<br>KR 10-2010-0051083 A<br>CN 101772382 A | |
| JP 2014-133778 A | 24 Jul. 2014 | (Family: none) | |
| JP 2013-249376 A | 12 Dec. 2013 | US 2015/0125643 A1 claims 1, 3, 7, 9, example 8, paragraphs [0046]-[0050], [0065], [0071]-[0073], [0131]-[0134]<br>WO 2013/180067 A1<br>EP 2857465 A1<br>CA 2873357 A<br>CN 104379687 A<br>KR 10-2015-0016950 A | |
| JP 2017-25318 A | 02 Feb. 2017 | (Family: none) | |
| JP 2014-514370 A | 19 Jun. 2014 | US 2014/0011018 A1 claims 1, 3, 10, examples, paragraphs [0070]-[0071], [0090]-[0094], [0099]-[0114], [0117]<br>WO 2012/118500 A1<br>CN 103502322 A<br>KR 10-2014-0020884 A | |
| JP 2015-168760 A | 28 Sep. 2015 | (Family: none) | |
| JP 2006-501108 A | 12 Jan. 2006 | US 2006/0093768 A entire text<br>WO 2004/013240 A1<br>EP 2128209 A1<br>CA 2493986 A1<br>CN 1717460 A | |

Form PCT/ISA/210 (patent family annex) (January 2015)

**EP 3 882 026 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001246695 A

- JP 3872998 B